# EUROPEAN PATENT SPECIFICATION

(11) **EP 2 695 537 B1**
(45) Date of publication and mention of the grant of the patent: **21.09.2016**
(21) Application number: 12767541.1
(22) Date of filing: 02.04.2012
(51) Int. Cl.: A43B 3/10, A43B 9/06, A43B 17/00, A43B 13/04, B29D 35/12, B29C 45/14, A43D 8/02, B29D 35/14, A43B 13/12, A43B 5/08, A43B 9/02

(54) **LIGHTWEIGHT SHOE MANUFACTURED WITHOUT AN ADHESIVE PROCESS**
OHNE KLEBEVERFAHREN HERGESTELLTER LEICHTGEWICHTIGER SCHUH
CHAUSSURE DE POIDS LÉGER FABRIQUÉE SANS TRAITEMENT À ADHÉSIF

(30) Priority: 05.04.2011 KR 20110031281
(43) Date of publication of application: 12.02.2014
(73) Proprietor: Koo, Seong-Jin, Busan 607-060 (KR)
(72) Inventor: Koo, Seong-Jin, Busan 607-060 (KR)
(74) Representative: Ferreccio, Rinaldo
(86) International application number: PCT/KR2012/002440
(87) International publication number: WO 2012/138084

(56) References cited:
- FR-A1- 2 745 693
- FR-A3- 2 824 451
- JP-A- 2005 110 738
- JP-A- 2006 192 723
- KR-A- 20030 022 260
- US-A- 3 416 174
- US-A- 4 276 671
- US-A- 4 899 465
- US-A- 5 222 313
- US-B1- 6 408 541

## Description

### Technical Field

The present invention relates, in general, to lightweight shoes and, more particularly, to an ultralight shoe which can be brought into close contact with the foot of a user regardless of a variety of user foot shapes and provide an anti-slip function, and a method for manufacturing the ultralight shoe without an adhesive process.

### Background Art

Generally, shoes function to protect the feet of human beings. When users who wear shoes walk or run, the shoes isolate the feet of the users from the outside environment and protect the feet. In modern life, most people wear shoes to protect their feet, and it is almost impossible to walk barefoot although barefoot walking is most suitable for the human body.

In order to overcome this, recently, different kinds of barefoot shoes for barefoot walking, that is most suitable for the human body, have been introduced. For example, shoes which embody Masai walking to make rolling type walking possible, shoes which can apply acupressure to the foot soles of users to improve blood circulation, etc. have been introduced.

However, the above-stated shoes basically include an outsole, a midsole, an upper, etc. Thus, even if the lightest material as possible is used, the weight of such a shoe is at least 200g. Therefore, users almost cannot have feeling of being barefoot. As such, because the users feel the weight of the shoes, the purposes of barefoot walking cannot be achieved.

Moreover, such shoes are manufactured in such a way that the outsole, the midsole and the upper are coupled to each other by means of an adhesive. However, adhesives have many environmental pollution materials, and using adhesives is one of major problems of the shoe manufacturing industry.

In other words, during a shoe manufacturing process, using adhesives deteriorates the working environment for workers. In addition, when shoes are discarded, components of adhesives cause environmental pollution and cannot be recycled.

On the other hand, lightweight shoes which do not apply a load to the foot of a user are recently proposed. Because such shoes are very light, users can have barefoot feeling. However, such lightweight shoes are only restrictively used. In detail, the most crucial points of an outsole of a shoe that makes contact with the ground are to provide an anti-slip function and improve grip force with respect to the ground. To achieve these purposes, the outsole is preferably made of natural rubber or synthetic rubber which can provide comparatively high grip force and an anti-slip function. However, such synthetic rubber or natural rubber is comparatively heavy, and the outsole made of synthetic rubber or natural rubber is bonded to a midsole by means of an adhesive after the outsole and the midsole are manufactured through separate processes. Therefore, such an outsole made of synthetic rubber or natural rubber cannot used to manufacture a lightweight shoe. Thus, lightweight shoes may not be able to have an anti-slip function. As a result, lightweight shoes have been used only in limited places, for example, seashores or the like, which do not require the anti-slip function.

FR 2 745 693 A1 discloses a ultralight shoe manufactured without adhesive, having an upper covering a top of a foot of a user, and a sole part making contact with a ground, wherein the sole part comprises an insole making contact with a bottom of the foot. The shoe also comprises an outsole and both the insole and the outsole are made of a polyurethane based material, the outsole being coupled to the insole by injection moulding and the upper being coupled to the insole by sewing and made of an elastic fabric (neoprene) having restoring elasticity, wherein the sole part and the upper part are coupled to each other without using an adhesive.

This shoe is manufactured by a process, in which a shoe element is engaged on a form, wherein only the lower part of the shoe element is imprisoned between two parts of a mould and wherein foamed bicomponent polyurethane is injected through a nozzle at the heel to form the sole in the bottom of the mold.

### Disclosure

### Technical Problem

Accordingly, the present invention has been made keeping in mind the above problems occurring in the prior art, and an object of the present invention is to provide an ultralight shoe which is manufactured without an adhesive process and has a reduced weight so that when a user who wears the shoes walks or runs, the user can feel like walking barefoot, and which has improved anti-slip function and grip force.

### Technical Solution

In order to accomplish the above object, in an aspect, the present invention provides an ultralight shoe according to claim 1.

The insole of the sole part may have a mesh diameter ranging from 100 µm to 300 µm, and the outsole of the sole part may be made of the polystyrene-based material, wherein the polystyrene-based material may comprise any one selected from among styrene-butadiene-styrene block copolymer (SBS), styrene-isoprene-styrene block copolymer (SIS), styrene-ethylene, butylene-styrene block copolymer (SEBS) and styrene-ethylene-propylene-styrene (SEPS) or a mixture of two or more selected from thereamong. The outsole may be configured such that the content of polystyrene ranges from 15 weight% to 40 weight% in a weight ratio to an entirety of the outsole, and the outsole may be formed by injection molding at a temperature ranging from 120°C to 150°C within one to five minutes. A perimeter of an outer surface of the upper (20) may be brought into close contact with a perimeter of an upper surface of the insole (34) of the sole part (30), and then the upper and the sole part may be coupled to each other by sewing (a) the perimeters of the upper and the sole part.

In another aspect, the present invention provides a method of manufacturing an ultralight shoe without an adhesive process, including: cutting a fabric having a mesh structure and manufacturing an insole; forming an outsole in such a way that the insole is located in an injection mold and an injection solution formed of a polystyrene-based material is injected into the injection mold by means of an injection machine, and simultaneously forming a sole part in such a way that the injection solution is penetrated into the mesh structure of the insole so that the outsole and the insole are integrally coupled to each other; and matching a perimeter of an upper, manufactured through a separate process using a fabric having restoring elasticity, with a perimeter of the sole part, and coupling the sole part and the upper to each other by sewing, thus forming the shoe.

The insole may have a mesh diameter ranging from 100 µm to 300 µm. The outsole may be made of any one selected from among styrene-butadiene-styrene block copolymer (SBS), styrene-isoprene-styrene block copolymer (SIS), styrene-ethylene, butylene-styrene block copolymer (SEBS) and styrene-ethylene-propylene-styrene (SEPS) or a mixture of two or more selected from thereamong. The upper may be made of a neoprene-based material having restoring elasticity ranging from 120% to 150%. After a perimeter of an outer surface of the upper is brought into surface contact with a perimeter of an upper surface of the insole of the sole part, the sewing may be conducted, thus preventing the upper from making contact with the ground.

### Advantageous Effects

In an ultralight shoe according to the present invention, an adhesive is not required. Thus, the present invention is environmental-friendly, and the productivity of a worker can be enhanced.

Furthermore, the ultralight shoe is very light so that a user can feel like walking barefoot as much as possible, and the wearing comfort for the user can be maximized.

### Description of Drawings

Fig. 1 is a perspective view of an ultralight shoe manufactured without an adhesive process according to an embodiment the present invention;
Fig. 2 is a sectional view taken along line A-A of Fig. 1; and
Fig. 3 is a view illustrating a process of manufacturing an ultralight shoe according to an embodiment of the present invention.

### Best Mode

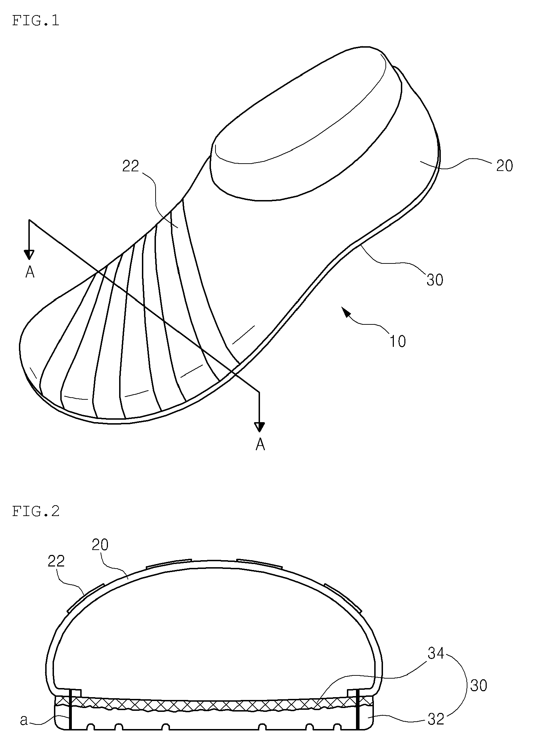

Hereinafter, an ultralight shoe according to an embodiment of the present invention will be described in detail with reference to the attached drawings. Fig. 1 is a view showing an embodiment of an ultralight shoe manufactured without an adhesive process, according to the present invention. Fig. 2 is a sectional view taken along line A-A of Fig. 1.

As shown in the drawings, the ultralight shoe 10 according to the present invention includes an upper 20 which covers the top of a foot of a user, and a sole part 30 which forms the bottom of the shoe and has an outsole which makes contact with the ground.

The upper 20 will be explained below. The upper 20 is a part which protects the top of the foot. The basic material of the upper 20 has appropriate elasticity to provide contact force between it and the top of the foot, whereby an additional structure such as a separate string tightening structure is not required. In other words, the upper 20 functions to protect the top of the foot and maintain the contactability between it and the top of the foot. Typically, a separate structure such as a string tightening structure or a zipper structure is required to maintain the contactability between the upper and the top of the foot. In this case, the contactability is maintained on only a string-tightened portion or zipper portion, but satisfactory contactability is not provided on the end of the top of the foot or the heel portion which is far from the string-tightened portion or zipper portion. Therefore, when the user walks with shoes that have the typical structure, the shoes are so loose that they may be come off easily, or the wearing comfort is reduced.

In order to overcome the problems of the typical shoes, in the present invention, the upper is made of elastic material so that the contactability can be provided to the entirety of the top of the foot, whereby the user can feel like walking barefoot. Such elastic material has sufficient elasticity and high restoring force. Preferably, a fabric such as neoprene-based fabric which is used to produce a swimsuit or the like is used as the elastic material of the upper. The elastic material of the upper is not limited to this and, for example, synthetic resin, rubber, etc. can also be used, so long as it can provide sufficient elastic restoring force.

The elastic material must satisfy the following two conditions to function as the upper. First, the thickness of the upper made of the elastic material must be 2 mm or more. The reason for this is to reliably protect the top of the foot from an external foreign substance. If the thickness of the upper is less than 2 mm, it may be easily torn by external impact and thus is not able to conduct the intended functions thereof. Second, the restoring elasticity of the elastic material must range from 120% to 150%. In other words, the restoring elasticity must be within a range in which wearing comfort can be maintained while the upper makes close contact with the top of the foot of the user. If the restoring elasticity is less than 120%, it is inconvenient for the user to wear the shoe because of excessive restoring elasticity, and the contactability between the upper and the top of the foot of the user is reduced. On the other hand, if the restoring elasticity is greater than 150%, it is easy for the user to wear the shoe and the contactability is increased, but excessive pressure is applied to the top of the foot of the user so that the user may feel pressure. Given this, it is preferable that the restoring elasticity of the upper range from 120% to 150%. In this case, convenience in wearing the shoe, the contactability between the upper and the top of the foot, and the wearing comfort of the user can be maintained. Meanwhile, to further improve the contactability between the upper and the top of the foot, as shown in the drawings, separate elastic tightening pieces 22 are provided in curved shapes on the upper at positions corresponding to the top of the foot. The tightening pieces 22 not only make the appearance of the shoe more beautiful but also function to bring the upper into closer contact with the top of the foot. The tightening pieces 22 are preferably attached to the outer surface of the upper by means of sewing or thermocompression bonding.

Next, the sole part 30 will be explained below. The sole part 30 is configured such that an outsole 32 which makes contact with the ground and an insole 34 which makes contact with the sole of the foot are integrally coupled to each other without using an adhesive.

Typically, the outsole 32 is made of natural rubber or synthetic rubber such as butadiene rubber to provide anti-slip performance and enhance grip force. In the conventional technique, such a rubber outsole 32 is formed by a mold, and an insole 34 is bonded to the outsole 32 by an adhesive. However, the present invention is characterized in that the outsole and the insole are integrated with each other without using an adhesive. The outsole and the insole will be explained in more detail below.

The outsole 32 must be lighter than the typical rubber outsole, have satisfactory anti-slip performance and grip force, and be coupled to the insole without using an adhesive. To achieve these purposes, in the present invention, TPE (thermoplastic elastomer) based material is used and, particularly, TPE based material which can be processed by injection molding is used.

In detail, the material of the outsole 32 is polystyrene-based, wherein any one selected from among styrene-butadiene-styrene block copolymer (SBS), styrene-isoprene-styrene block copolymer (SIS), styrene-ethylene, butylene-styrene block copolymer (SEBS) and styrene-ethylene-propylene-styrene (SEPS) or a mixture of two or more selected from among them is used as basic material of the outsole 32. In such polystyrene-based material, polystyrene portion functions as a hard segment, and remnant portions such as polybutadiene, polyisoprene, etc. function as a soft segment. Thus, to satisfy the requirements of the outsole, the content of polystyrene is adjusted such that it ranges from 15 weight% to 40 weight% in weight ratio to the entirety. In the case where materials are mixed in such a ratio, the outsole can be formed by injection molding at a temperature ranging from 120°C to 150°C within one to five minutes. Furthermore, when the injection molding process is conducted, the flowability is improved so that the bonding force between the outsole and the insole which will be explained in detail below can be enhanced.

Next, the insole 34 will be explained below. The insole 34 used in the present invention is a part which makes direct contact with the sole of the user and must satisfy requirements in which the insole must be able to give a sense of being barefoot, effectively absorb water including sweat, and adhere to the outsole 32 without using an adhesive during the injection molding process. To satisfy such requirements, the insole 34 has a thickness of 1 mm or more and is made of natural fabric or synthetic fabric having a mesh shape. Preferably, the mesh diameter of the fabric ranges from 100 µm to 300 µm. If the mesh diameter of the fabric is less than 100 µm, the tissue of the outsole cannot satisfactorily permeate into the fabric of the insole during the injection molding process, thus reducing the bonding strength between the outsole and the insole. If the mesh diameter of the fabric is greater than 300 µm, the tissue of the outsole permeates to the upper surface of the insole, thus making the fabric feel rough.

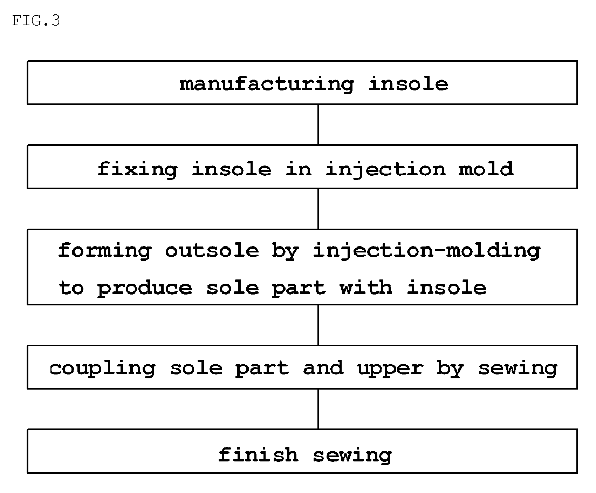

Hereinafter, a process of manufacturing the ultralight shoe according to the present invention will be described with reference to Fig. 3. Fig. 3 is a view illustrating the process of manufacturing the ultralight shoe according to the present invention. Fig. 4 is a view showing an operation of coupling the sole part to the upper during a manufacturing process.

As shown in the drawing, an insole 34 made of fabric having a mesh diameter ranging from 100 µm to 300 µm is fixed in a mold. Thereafter, polystyrene-based material for forming the outsole is injected into the mold by means of an injection machine. The temperature of an inlet of the injection machine ranges from 180°C to 200°C. The temperature of an outlet of the injection machine from which the polystyrene-based material is injected into the mold ranges from 120°C to 150°C. After the material has been injected into the mold from the injection machine, the time of about a minute to about five minutes is required until the outsole 32 is completely formed and reliably bonded to the insole 34. This process will be explained in more detail. When injection solution is injected from the injection machine into the mold, the mold is filled up with the injection solution, because the injection solution is in a liquid phase. The injection solution that meets the surface of the insole 34 penetrates into the mesh of the insole 34 that has the mesh structure. In this state in which the injection solution has been completely injected into the mold and some of the injection solution has penetrated into the mesh structure of the insole, as a predetermined time passes, the injection solution that has been in a liquid phase hardens, thus forming the outsole 32 having a shape corresponding to that of the mold. Some injection solution that has penetrated into the mesh structure of the insole 34 bonds the outsole 32 to the insole 34, thus forming the sole part 30 in which the outsole 32 and the insole 34 are integrated with each other.

The sole part 30 in which the outsole 32 and the insole 34 are integrated with each other is coupled to the upper 20 by sewing, thus completing the ultralight shoe. This shoe manufacturing process will be explained in more detail herein below. As shown in Fig. 2, unlike typical sewing, the perimeter of the outer surface of the upper 20 is brought into close contact with the perimeter of the upper surface of the insole 34 of the sole part 30, and then the perimeter of the upper 20 is coupled to the perimeter of the insole 34 by sewing, as designated by reference character a. Thereby, the shape of the shoe is primarily formed. In this way, the perimeter of the upper 20 can be prevented from making contact with the ground, and only the outsole 32 can make contact with the ground, thus minimizing external damage of the upper 20. That is, unlike the above-mentioned method, if the upper 20 is coupled to the sole part 30 by the typical sewing method in which the perimeter of the inner surface of the upper 20 is brought into contact with the perimeter of the lower surface of the outsole 32 and then is coupled thereto by sewing to form a shoe, the perimeter of the outsole 32 is disposed on the inner surface of the upper 20, and the perimeter of the upper 20 makes contact with the ground. In this case, the perimeter of the upper 20 that makes contact with the ground is worn. Then, the upper 20 that is made of fabric unlike that of the outsole 32 is easily detached from the sole part, thus becoming unusable. Unlike the typical shoe manufacturing method, if the sewing is conducted by the method according to the present invention, the perimeter of the upper 20 is disposed on the upper surface of the insole 32 of the sole part 30, and only the outsole 32 can make contact with the ground. Thereby, the upper can be reliably prevented from being damaged. As stated above, after the upper 20 and the sole part 30 has been primarily coupled to each other by sewing, finish sewing for a heel portion is conducted, thus completing the shoe. In this way, the ultralight shoe which includes the outsole 32 having improved anti-slip performance and grip force can be manufactured without a separate adhesive process.

Although the construction of the ultralight shoe and the manufacturing process according the preferred embodiment of the present invention have been disclosed for illustrative purposes, those skilled in the art will appreciate that various modifications, additions and substitutions are possible, without departing from the scope of the invention as disclosed in the accompanying claims.

### Industrial Applicability

As described above, the present invention relates to an ultralight shoe and, more particularly, provides an ultralight shoe which can be brought into close contact with the foot of a user regardless of a variety of user foot shapes and provide an anti-slip function, and a method for manufacturing the ultralight shoe without an adhesive process.

## Claims

1. An ultralight shoe, manufactured without an adhesive process, having an upper (20) covering a top of a foot of a user, and a sole part (30) making contact with a ground, the ultralight shoe comprising:
the sole part comprising an insole (34) making contact with a bottom of the foot, and an outsole (32), the outsole being coupled to the insole by injection molding; and
the upper (20) coupled to the insole (34) by sewing and made of an elastic fabric having restoring elasticity ranging from 120% to 150%,
wherein the sole part (30) and the upper (20) are coupled to each other without using an adhesive,
**characterized in that** the insole (34) is made of a fabric having a mesh structure, the outsole (32) is made of a TPE (thermoplastic elastomer) based material, and the upper (20) is coupled to the whole sole part (30) by sewing.

2. The ultralight shoe of claim 1, wherein the insole (34) of the sole part (30) has a mesh diameter ranging from 100 µm to 300 µm, and
the outsole (32) of the sole part is made of the polystyrene-based material,
wherein the polystyrene-based material comprises any one selected from among styrene-butadiene-styrene block copolymer (SBS), styrene-isoprene-styrene block copolymer (SIS), styrene-ethylene, butylene-styrene block copolymer (SEBS) and styrene-ethylene-propylene-styrene (SEPS) or a mixture of two or more selected from thereamong.

3. The ultralight shoe of claim 2, wherein the outsole (32) is configured such that a content of polystyrene ranges from 15 weight% to 40 weight% in a weight ratio to an entirety of the outsole, and
the outsole is formed by injection molding at a temperature ranging from 120°C to 150°C within one to five minutes.

4. The ultralight shoe of any one of claims 1 through 3, wherein a perimeter of an outer surface of the upper (20) is brought into close contact with a perimeter of an upper surface of the insole (34) of the sole part (30), and then the upper and the sole part are coupled to each other by sewing (a) the perimeters of the upper and the sole part.

5. A method of manufacturing an ultralight shoe without an adhesive process, comprising:
cutting a fabric having a mesh structure and manufacturing an insole (34);
forming an outsole (32) in such a way that the insole (34) is located in an injection mold and an injection solution formed of a polystyrene-based material is injected into the injection mold by means of an injection machine, and simultaneously forming a sole part (30) in such a way that the injection solution is penetrated into the mesh structure of the insole (34) so that the outsole (32) and the insole (34) are integrally coupled to each other; and
matching a perimeter of an upper (20), manufactured through a separate process using a fabric having restoring elasticity, with a perimeter of the sole part, and coupling the sole part and the upper (20) to each other by sewing, thus forming the shoe.

6. The method of claim 5, wherein the insole (34) has a mesh diameter ranging from 100 µm to 300 µm,
the outsole (32) is made of any one selected from among styrene-butadiene-styrene block copolymer (SBS), styrene-isoprene-styrene block copolymer (SIS), styrene-ethylene, butylene-styrene block copolymer (SEBS) and styrene-ethylene-propylene-styrene (SEPS) or a mixture of two or more selected from thereamong, and
the upper (20) is made of a neoprene-based material having restoring elasticity ranging from 120% to 150%.

7. The method of claim 5 or 6, wherein after a perimeter of an outer surface of the upper (20) is brought into surface contact with a perimeter of an upper surface of the insole (34) of the sole part (30), the sewing is conducted, thus preventing the upper from making contact with the ground.

## Patentansprüche

1. Ultraleichter Schuh, der ohne Klebeverfahren hergestellt ist, der ein Oberteil (20), das eine Oberseite eines Fußes eines Benutzers bedeckt, und ein Sohlenteil (30) aufweist, das mit einem Boden in Kontakt kommt, wobei der ultraleichte Schuh umfasst:
das Sohlenteil, das eine Innensohle (34), die mit einer Unterseite des Fußes in Kontakt kommt, und eine Außensohle (32) aufweist, wobei die Außensohle mit der Innensohle durch Spritzgießen verbunden ist; und
das Oberteil (20), das mit der Innensohle (34) durch Nähen verbunden ist und aus einem elastischen Stoff hergestellt ist, der eine Rückstellelastizität im Bereich von 120% bis 150% hat,
wobei das Sohlenteil (30) und das Oberteil (20) ohne Verwendung eines Klebstoffs miteinander verbunden sind,
**dadurch gekennzeichnet, dass** die Innensohle (34) aus einem Stoff hergestellt ist, der eine Maschenstruktur hat, wobei die Außensohle (32) aus einem TPE-(thermoplastischen Elastomer)-basierten Material hergestellt ist, und das Oberteil (20) mit dem ganzen Sohlenteil (30) durch Nähen verbunden ist.

2. Ultraleichter Schuh nach Anspruch 1, bei dem die Innensohle (34) des Sohlenteils (30) einen Maschendurchmesser im Bereich von 100 µm bis 300 µm hat, und
die Außensohle (32) des Sohlenteils aus Polystyrol-basiertem Material hergestellt ist,
wobei das Polystyrol-basierte Material irgendeines umfasst, das aus einem Styrol-Butadien-Styrol-Blockcopolymer (SBS), Styrol-Isopren-Styrol-Blockcopolymer (SIS), Styrol-Ethylen, einem Butylen-Styrol-Blockcopolymer (SEBS) und Styrol-Ethylen-Propylen-Styrol (SEPS) ausgewählt ist, oder eine Mischung, die aus zwei oder mehr von diesen ausgewählt ist.

3. Ultraleichter Schuh nach Anspruch 2, bei dem die Außensohle (32) derart ausgelegt ist, dass sich ein Polystyrolgehalt von 15 Gewichtsprozent bis 40 Gewichtsprozent in einem Gewichtsverhältnis bezogen auf die Gesamtheit der Außensohle erstreckt, und
die Außensohle durch Spritzgießen bei einer Temperatur, die sich zwischen 120°C und 150°C bewegt, innerhalb von einer bis fünf Minuten ausgebildet wird.

4. Ultraleichter Schuh nach irgendeinem der Ansprüche 1 bis 3, bei dem ein Umfang einer Außenfläche des Oberteils (20) mit einem Umfang einer oberen Oberfläche der Innensohle (34) des Sohlenteils (30) in engen Kontakt gebracht wird und dann das Oberteil und das Sohlenteil miteinander durch Zusammennähen (a) der Umfänge des Oberteils und des Sohlenteils verbunden werden.

5. Verfahren zum Herstellen eines ultraleichten Schuhs ohne Klebeverfahren, umfassend:
Schneiden eines Stoffs, der eine Maschenstruktur hat, und Herstellen einer Innensohle (34);
Ausbilden einer Außensohle (32) derart, dass die Innensohle (34) in einer Spritzgießform angeordnet ist und eine aus einem Polystyrol-basierten Material gebildete Spritzgießlösung in die Spritzgießform mittels einer Spritzgießmaschine eingespritzt wird, und gleichzeitiges Ausbilden eines Sohlenteils (30) derart, dass die Spritzgießlösung in die Maschenstruktur der Innensohle (34) eindringt, so dass die Außensohle (32) und die Innensohle (34) miteinander einstückig verbunden sind; und
Zusammenpassen eines Umfangs eines Oberteils (20), das durch ein separates Verfahren unter Verwendung eines Stoffes mit Rückstellelastizität hergestellt wurde, mit einem Umfang des Sohlenteils und Verbinden des Sohlenteils und des Oberteils (20) miteinander durch Nähen, wodurch der Schuh gebildet wird.

6. Verfahren nach Anspruch 5, bei dem die Innensohle (34) einen Maschendurchmesser im Bereich von 100 µm bis 300 µm hat,
die Außensohle (32) aus irgendeinem, das von einem Styrol-Butadien-Styrol-Blockcopolymer (SBS), Styrol-Isopren-Styrol-Blockcopolymer (SIS), Styrol-Ethylen, einem Butylen-Styrol-Blockcopolymer (SEBS) und Styrol-Ethylen-Propylen-Styrol (SEPS) ausgewählt wird, oder aus einer Mischung, die aus zwei oder mehr von diesen ausgewählt wird, hergestellt ist, und
das Oberteil (20) aus einem Neopren-basierten Material hergestellt ist, das eine Rückstellelastizität im Bereich von 120% bis 150% hat.

7. Verfahren nach Anspruch 5 oder 6, bei dem, nachdem ein Umfang einer Außenfläche des Oberteils (20) mit einem Umfang einer oberen Oberfläche der Innensohle (34) in Oberflächenkontakt gebracht wurde, das Nähen ausgeführt wird, wodurch verhindert wird, dass das Oberteil mit dem Boden in Kontakt kommt.

## Revendications

1. Chaussure ultralégère fabriquée sans un traitement avec adhésif, présentant une tige (20) couvrant une partie supérieure d'un pied d'un utilisateur, et une partie de semelle (30) en contact avec un sol, la chaussure ultralégère comprenant :
la partie de semelle comprenant une semelle intérieure (34) en contact avec la plante de pied, et une semelle extérieure (32), la semelle extérieure étant couplée à la semelle intérieure par moulage par injection ; et
la tige (20) étant couplée à la semelle intérieure (34) par couture et étant faite d'un tissu élastique ayant une élasticité de rappel comprise entre 120 % et 150 %,
la partie de semelle (30) et la tige (20) étant couplée l'une à l'autre sans utiliser de colle,
**caractérisée en ce que** la semelle intérieure (34) est faite d'un tissu ayant une structure en mailles, la semelle extérieure (32) est faite d'un matériau à base de TPE (élastomère thermoplastique), et la tige (20) est couplée à l'ensemble de la partie de semelle (30) par couture.

2. Chaussure ultralégère selon la revendication 1, dans laquelle la semelle intérieure (34) de la partie de semelle (30) présente un diamètre de maille compris entre 100 µm et 300 µm, et
la semelle extérieure (32) de la partie de semelle est faite d'un matériau à base de polystyrène,
dans lequel le matériau à base de polystyrène comprend l'un quelconque choisi parmi un copolymère bloc styrène-butadiène-styrène (SBS), un copolymère bloc styrène-isoprène-styrène (SIS), du styrène-éthylène, un copolymère bloc butylène-styrène (SEBS) et du styrène-éthylène-propylène-styrène (SEPS), ou un mélange de deux ou plusieurs éléments choisis parmi ceux-ci.

3. Chaussure ultralégère selon la revendication 2, dans laquelle la semelle extérieure (32) est configurée de telle sorte que la teneur en polystyrène est comprise entre 15 % en poids et 40 % en poids dans un rapport pondéral par rapport à l'ensemble de la semelle extérieure,
et la semelle extérieure est formée par moulage par injection à une température comprise entre 120 °C et 150 °C en l'espace d'une à cinq minutes.

4. Chaussure ultralégère selon l'une quelconque des revendications 1 à 3, dans laquelle un périmètre d'une surface externe de la tige (20) est amené en contact étroit avec un périmètre d'une surface supérieure de la semelle intérieure (34) de la partie semelle (30), puis la tige et la partie de semelle sont couplées l'une à l'autre par couture (a) des périmètres de la tige et de la partie de semelle.

5. Procédé de fabrication d'une chaussure ultralégère sans traitement avec adhésif, comprenant :
la coupe d'un tissu ayant une structure en mailles et la fabrication d'une semelle intérieure (34) ;
la formation d'une semelle extérieure (32) de telle manière que la semelle intérieure (34) est située dans un moule d'injection et qu'une solution d'injection formée d'un matériau à base de polystyrène est injectée dans le moule d'injection au moyen d'une machine d'injection, et la formation simultanée d'une partie de semelle (30) de telle manière que la solution d'injection pénètre dans la structure en mailles de la semelle intérieure (34) de telle sorte que la semelle extérieure (32) et la semelle intérieure (34) sont intégralement reliées l'une à l'autre ; et
la mise en correspondance d'un périmètre d'une tige (20) fabriquée par un procédé séparé à l'aide d'un tissu présentant une élasticité de rappel, avec un périmètre de la partie de semelle, et le couplage l'une à l'autre de la partie de semelle et de la tige (20) par couture, formant ainsi la chaussure.

6. Procédé selon la revendication 5, dans lequel la semelle intérieure (34) a un diamètre de maille compris entre 100 µm et 300 µm,
la semelle extérieure (32) est faite d'un élément quelconque choisi parmi un copolymère bloc styrène-butadiène-styrène (SBS), un copolymère bloc styrène-isoprène-styrène (SIS), du styrène-éthylène, un copolymère bloc butylène-styrène (SEBS) et du styrène-éthylène-propylène-styrène (SEPS), ou un mélange de deux ou plusieurs éléments choisis parmi ceux-ci, et
la tige (20) est faite d'un matériau à base de néoprène ayant une élasticité de rappel comprise entre 120 % et 150 %.

7. Procédé selon la revendication 5 ou 6, dans lequel, après qu'un périmètre d'une surface externe de la tige (20) a été amené en contact de surface avec un périmètre d'une surface supérieure de la semelle intérieure (34) de la partie de semelle (30), la couture est réalisée empêchant ainsi la tige d'entrer en contact avec le sol.
